# EUROPEAN PATENT APPLICATION

(11) **EP 4 667 804 A1**
(43) Date of publication of application: **24.12.2025**
(21) Application number: 25181241.8
(22) Date of filing: 06.06.2025
(51) Int. Cl.: F16L 59/02

(54) **INSULATION DEVICE**

(30) Priority: 20.06.2024 FI 20245806
(71) Applicant: Adiabatix Oy, 65380 Vaasa (FI)
(72) Inventor: Valkeapää, Kari, 60320 Seinäjoki (FI); Jaskari, Sami, 60320 Seinäjoki (FI)
(74) Representative: Kolster Oy Ab

(57) **Abstract**

The invention relates to an insulation device (1), comprising: sections (2) which are supported against each other in a configuration where the sections together delimit an opening (4) extending through the insulation device (1), the sections comprising an inner wall (6) which faces and delimits the opening (4), an outer wall (7) facing away from the opening (4) and a first (8) and a second (9) end wall facing in opposite directions. To obtain an insulation device minimizing the need for tailor making insulation devices for different installation sites, each section comprising modules (15, 16, 17) arranged slidably in relation to each other to partially overlap so that a length of the sections are adjustable in a longitudinal direction (5) of the insulation device by mutual sliding of the modules in relation to each other, and the insulation device is provided with slide locks (18) for locking the modules (15, 16, 17) to each other in an overlapping position.

## Description

### BACKGROUND OF THE INVENTION

### FIELD OF THE INVENTION

This invention relates to an insulation device which is assembled from a plurality of sections which are connected to each other to delimit an opening where an object to be insulated is located. In the following, the insulation device will, by way of example, be primarily explained by assuming that the object to be insulated is a section of a tube. It should, however, be observed that the insulation device can be utilized also for other objects.

### DESCRIPTION OF PRIOR ART

Previously there is known an insulation device which is assembled of sections that are connected to each other such that a tube to be insulated is enclosed in an opening extending through a center part of the insulating device. By arranging several similar insulating devices in a face-to-face configuration along a longitudinal direction of the tube, a long section of the tube can be insulated from the surroundings.

A challenge with such a known insulating device is that the length of the tube section that needs to be insulated varies from case to case. Consequently, in order to match the exact length of a specific tube section that needs to be insulated, it is necessary to manufacture one or more insulation devices which together (in the face-to-face configuration) have a length that exactly matches the length of that specific tube section.

This is cumbersome and expensive, because it creates a need to tailor-make insulation devices separately for different installation sites.

### SUMMARY OF THE INVENTION

An object of the present invention is to solve the above-mentioned problem and to provide an insulation device which minimizes the need to tailor-make insulation devices for different installations sites. This object is achieved with an insulation device according to independent claim 1.

When the sections of the insulation device are implemented with modules that are slidable in relation to each other, it becomes possible to adjust the length of the sections before the modules are locked to each other with slide locks into a desired overlapping position. Due to this adjustment possibility, the same insulation device can be used at different installation sites where insulation devices of different lengths are needed.

### BRIEF DESCRIPTION OF DRAWINGS

In the following the present invention will be described in closer detail by way of example and with reference to the attached drawings, in which
Figures 1 to 2 illustrate an insulation device,
Figure 3 illustrates attachment parts of the insulation device,
Figure 4 illustrates modules of the insulation device,
Figure 5 illustrates alternative attachment parts, and
Figure 6 illustrates an installation site for an insulation device.

### DESCRIPTION OF AT LEAST ONE EMBODIMENT

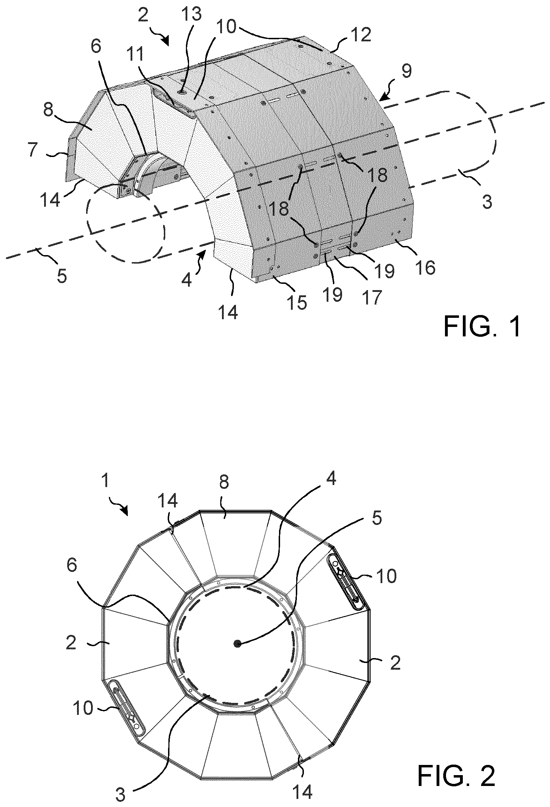

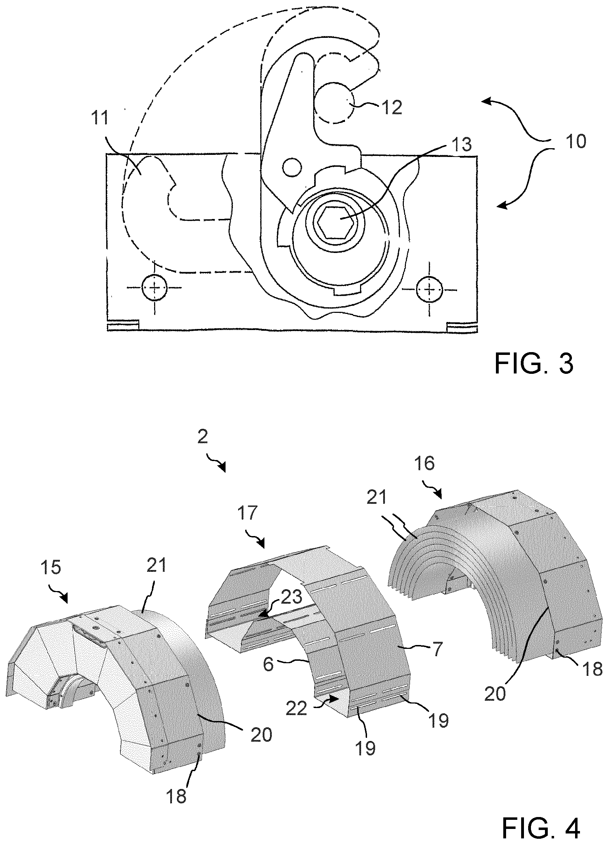

Figure 1 illustrates a section of an attachment part, Figure 2 illustrates an attachment part with two sections according to Figure 1, and Figure 3 illustrates attachment parts of the insulation device.

Figure 1 illustrates one section 2 of an insulation device 1 and Figure 2 illustrates an insulation device 1 consisting of two sections 2 supported against each other in a configuration where the sections together form an opening 4 extending through the insulation device 1. It should, however, be observed that the number of sections 2 included in one insulation device may be more than two, depending on the implementation.

Figures 1 and 2 also illustrated with dotted lines a tube 3 which in a longitudinal direction 5 of the insulation device extends through the opening 4. The tube 3 may be a tube of a powerplant passing a hot fluid, for instance, and the insulation device 1 is utilized to minimize heat losses due to dissipation from the surface of the tube 3, for instance.

The sections 2 each include an inner wall 6 which faces and delimits the opening 4, an outer wall 7 which faces away from the opening 4 and a first 8 and a second 9 end wall facing in opposite direction. In the illustrated example the first end wall 8 and the second end wall 9 extend in a direction which is perpendicular in relation to the longitudinal axis 5.

As a tube 3 requiring insulation typically is longer than a single insulation device 1, a need exists to connect a plurality of insulation devices to each other in a face-to-face configuration along the length of the tube 3. For this purpose, the illustrated insulation device 1 is provided with attachment parts 10. One alternative is to provide the first end wall 8 with an attachment part 10 having a hook 11 and the second end wall 9 with an attachment part 10 having a support 12 which can be engaged by a hook, as illustrated by way of example in Figure 3. With such a solution, once the first end wall 8 of the illustrated insulation device 1 is brought into a face-to-face position with a second end wall 9 of a second similar insulation device, a tool can be inserted into the openings 13 in the illustrated insulation device 1, so that the hooks 11 provided to the first end wall 8 of both of the illustrated sections 2 can be rotated to engage the corresponding supports 12 provided to the second end surface of both of the sections in the second similar insulation device. This makes it possible to firmly attach the two insulation devices to each other in the face-to-face configuration.

In order to lock the two sections 2 of the insulation device 1 to each other into the position illustrated in Figure 2, the contact surfaces 14 arranged against each other may in some implementations be provided with similar attachment parts as illustrated in Figure 3. However, due to lack of space, an alternative structure may be used instead of the illustrated combination of a hook 11 and support 12.

In some implementations, the design of the sections 2 may be such that there is no room at all for attachment at the contact surfaces 14. In that case alternative ways of keeping the sections 2 of the insulation device 1 against each other may be in use.

One alternative is that a band, such as a steel band, is arranged to completely surround the outer wall 7 of the insulation device, so that the sections 2 can be pressed against each other due to the force provided by the band.

Another alternative is that the insulation device 1 is attached via the first end wall 7 or via the second end wall 8 to an insulation part consisting of one section only which completely around 360° surrounds the tube. In that case firm attachment by the attachment parts of the sections 2 in the illustrated insulation device to this 360° surrounding insulation device is sufficient to keep the contact surfaces 14 of the sections 2 against each other.

Figure 4 illustrates modules of the insulation device 1 which has been explained in connection with Figures 1 to 3. In praxis, Figure 4 illustrates the modules of one of the sections 2. Both of the sections 2 which in Figure 2 are included in the insulation device 1 have similar modules as illustrated in Figure 4.

The modules 15, 16 and 17 are slidably arranged in relation to each other, so that the modules partially overlap each other once the insulation device 1 has been assembled and installed at an installation site.

In Figure 1 the insulation device 1 is illustrated in an extracted position, where the modules 15, 16 and 17 of the section 2 have been moved way from each other to each other to maximize the length of the section 2 and of the entire insulation device 1 in the longitudinal direction 5. Once a suitable length has been obtained, slide locks 18 are used to lock the modules to each other in the overlapping position. The slide locks are by way of example implemented in the illustrated example with blind rivets or screws, for instance, which protrude inwards from the outer walls of the first 15 and second modules 16, which are end modules, into elongated slots 19 in a third module 17, which is a center module. Once the desired length of the section 2 has obtained, the blind rivets or screws are tightened to lock the modules 15, 16 and 17 to each other by friction between the outer walls 7.

In some implementations it may be advantageous to utilize slide locks which do not provide a rigid locking between the modules. Such slide locks may utilize friction in the locking of the modules. Consequently, sliding may be allowed once the forces moving the modules in relation to each other become large. This is advantageous, for instance, when a long tube is insulated with a plurality of insulation devices and the heat expansion of the tube increases the length substantially. In that case, when the slide locks carry out the locking with friction, the slide locks allow the modules to slide in relation to each other once the heat expansion causes forces which are large enough to move the modules in relation to each other despite of the friction provided by the slide locks.

The length adjustment made possible with the illustrated example is in praxis limited only by the length of the modules 15, 16, and 17 and the length of the slots 19. The length may vary from what has been illustrated in Figure 1 as the maximum length, to a minimum length corresponding to the combined length of the first 15 and second 16 modules, which means that the third module 17 is in praxis completely received within the first 15 and second 16 modules, so that the edges 20 of the first 15 and second 16 modules contact each other.

The first module 15 and the second module 16 both comprise a plurality of insulation plates 21 extending in a spaced configuration out of these modules. The inner ends of the insulation plates 21 are attached to the end wall 8 and 9 of the first and second modules, for instance. The insulation plates 21 from the first end module 15 extend towards the second module 16, and similarly, the insulation plates 21 from the second module 16 extend towards the first module 15. Due to the spaced configuration, the insulation plates 21 from the left end module 15 fit into the spaced between the insulation plates 21 from the right end module 16.

The third module 17 in the middle has an inner wall 6 and an outer wall 7 which enclose the overlapping parts of the first 15 and the second 16 module. The insulation plates 21 extending from the first module 15 are received via a first inlet 22 into the third module 17 and the insulating plates from the second module 16 are received via a second inlet 23 into the third module 17.

With the described and illustrated structure, it becomes possible to freely adjust the length of the sections 2 and of the insulation device 1 within a relatively large range according to the current need, however, by simultaneously ensuring that the insulating plates 21 extending from the first 15 and second 16 module all the time overlap each other, which ensures sufficient and insulation.

The insulating plates 21 may be curved plates having an axis of curvature located in the opening 4 of the insulation device 1. In the illustrated example it is by way of example assumed that the inner wall 6, outer wall 7 and the first 8 and second 9 end walls consist of plates having a planar surface. This simplifies manufacturing of the insulation device and ensures that a very efficient insulation device is easy to manufacture. However, in other implementations it is possible to utilize curved plates in the inner wall 6 and in the outer wall 7.

The material used in the insulation device 1 may vary depending on the intended use. For instance, in a power plant it is beneficial to manufacture the inner wall 6, the outer wall 7, the first 8 and second end 9 walls and the insulation plates 21 of metal, such as stainless steel. This ensures a rigid insulation device capable for use at high temperatures. However, in other implementations a variety of materials, including non-metallic materials may be used.

In the illustrated example it has by way of example been assumed that a middle module 17 is in use between the first 15 and second modules 16. However, in some implementations the middle module might not be necessary, but instead the first 15 module may be dimensioned to receive the second module 16, both insulation plates 21 and the inner 6 and outer wall 7 into the space delimited by the inner 6 and outer wall of the first module 15.

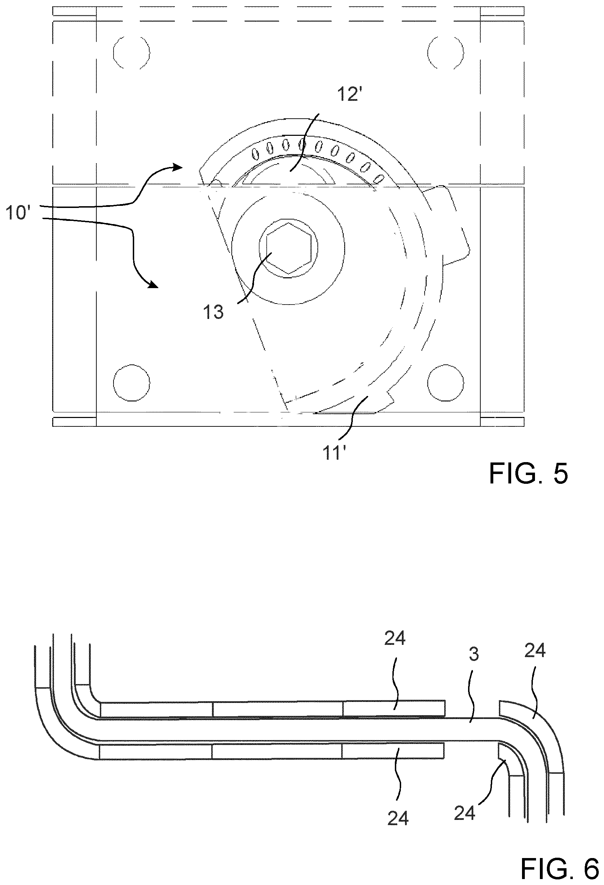

Figure 5 illustrates alternative attachment parts 10' which can be used in the insulation device of Figures 1, 2 and 4 instead of those illustrated in Figure 3.

Also in this embodiment an attachment part shaped as a hook 11' is used in one and wall in combination with a support 12' in the other end wall. However, in this case the hook 11' is differently shaped to have a spiral form where the radius of the spiral decreases as the hook 11' is rotated with a tool via the opening 13. Due to this the insulation device with the hook 11' is tightened against the other other insulation device with the support 12'. In Figure 5 the hook 11' has been rotated close to its final position for locking the two insulation devices to each other.

Figure 6 illustrates an installation site for an insulation device 1. In Figure 6 a part of a tube is illustrated. Several other insulation devices 24 (shown in cross section) have already been mounted to insulate the tube. Some of these other insulation devices are straight and other are curved. However, they may all be attached to each other with similar attachment devices as has been illustrated in Figures 3 or 5.

In Figure 6 it can be seen that only one section of the tube 3 (located at number 3 in Figure 6) has still not been insulated. Around this section of the tuber 3, an insulation device as illustrated in Figures 1, 2 and 4 can be mounted. Consequently, the modules 15, 16 and 17 of the sections 2 can be moved in relation to each other so that the insulation device 1 exactly matches the length of the section of the tube 3 that is being insulated. In this position the slide locks 18 can be used to lock the modules to each other by way of friction, and the attachment parts 10 or 10' can be used to attach the sections 2 of the insulation device 1 to the sections of the other surrounding insulation devices.

It is to be understood that the above description and the accompanying figures are only intended to illustrate the present invention. It will be obvious to a person skilled in the art that the invention can be varied and modified without departing from the scope of the invention.

## Claims

1. Insulation device (1), comprising:
sections (2) which are supported against each other in a configuration where the sections together delimit an opening (4) extending through the insulation device (1),
the sections comprising an inner wall (6) which faces and delimits the opening (4), an outer wall (7) facing away from the opening (4) and a first (8) and a second (9) end wall facing in opposite directions,
each section comprising modules (15, 16, 17) arranged slidably in relation to each other to partially overlap so that a length of the sections are adjustable in a longitudinal direction (5) of the insulation device by mutual sliding of the modules in relation to each other, and
the insulation device is provided with slide locks (18) for locking the modules (15, 16, 17) to each other in an overlapping position, **characterized in that**
the first end wall (8) and the second end wall (9) are provided with attachment parts (10, 10') for attaching the insulation device (1) to attachment parts of another insulation device (24) in an end-to-end configuration, the attachment part (10, 10') on the first end wall (8) comprises a hook (11, 11'), and the attachment part (10, 10') on the second end wall (9) comprises a support (12, 12') for being engaged by a hook (11, 11').

2. The insulation device according to claim 1, wherein the slide locks (18) for locking the modules (15, 16, 17) to each other in the overlapping position engage the outer walls (7).

3. The insulation device according to one of claims 1 or 2, wherein the slide locks (18) lock the modules (15, 16, 17) to each other by friction.

4. The insulation device according to one of claims 1 to 3, wherein at least one section comprises a first module (15) with a plurality of insulation plates (21) extending in a spaced configuration towards a second module (16), the second module (16) having a plurality of insulation plates (21) extending in a spaced configuration towards the first module (15), and wherein the insulating plates (21) from the first and second module protrude into spaces in the other one of the first and second module.

5. The insulation device according to claim 4, wherein the at least one section additionally comprises a third module (17) having an inner (6) and an outer wall (7) enclosing overlapping parts of the first and the second module by receiving via a first inlet (22) the plurality of insulating plates (21) extending from the first module (15) and via a second inlet (23) the plurality of insulating plates (21) extending from the second module (16).

6. The insulation device according to one of claims 4 to 5, wherein the plurality of insulating plates (21) are curved plates having an axis of curvature located in the opening (4).

7. The insulation device according to one of claims 1 to 6, wherein the inner wall (6), the outer wall (7) and the first (8) and the second (9) end walls of at least one section consists of plates having planar surfaces.

8. The insulation device according to one of claims 1 to 7, wherein the inner wall (6), the outer wall (7), the first (8) and the second (9) end walls, and the insulation plates (21) of the insulation device are metal plates.
